# EUROPEAN PATENT APPLICATION

(11) **EP 4 379 973 A1**
(43) Date of publication of application: **05.06.2024**
(21) Application number: 23165393.2
(22) Date of filing: 30.03.2023
(51) Int. Cl.: H01R 33/94, H01R 33/945, F21V 23/06, H01R 13/625, H02G 3/20

(54) **SEPARATE POWER CONNECTION DEVICE**

(30) Priority: 29.11.2022 CN 202223183174 U
(71) Applicant: Yangzhou Huacai Opto Co., Ltd., Yangzhou City, Jiangsu (CN)
(72) Inventor: QIAO, Huajian, Yangzhou City, Jiangsu, (CN)
(74) Representative: Sun, Yiming

(57) **Abstract**

The present application discloses a separate power connection device. The separate power connection device includes a power connection female base and a power connection male head. The bottom of the power connection female base is provided with a fixing groove with a notch facing the power connection male head, the outer peripheral side of the power connection male head is provided with a clamping groove, the inner side wall of the fixing groove is provided with a clamping lug, the power connection female base is internally provided with a PCB-A board, and the power connection male head is internally provided with a PCB-B board. The power connection device of the present application is applicable to most lamps and has high adaptability, and lamps using the present application are more convenient to mount and maintain.

## Description

### TECHNICAL FIELD

The present application relates to the field of lamps, and particularly relates to a separate power connection device.

### BACKGROUND

As people's quality of life improves, they use a variety of lamps for decoration and heightening atmosphere. At present, there are many kinds of lamps, including pendant lamps, ceiling lamps, wall lamps, mirror lamps, down lamps and decorative lamps commonly used in commercial lighting and domestic premises. As people's requirements for lamps become higher and higher, especially as the labor costs required to mount and maintain existing lamps become higher and higher, there is an urgent need for a more convenient lamp power connection system more facilitating mounting and maintaining.

### SUMMARY

An embodiment of the present application provides a separate power connection device in order to solve the problem that the mounting and maintaining cost of an existing lamp is high.

The present application provides a separate power connection device, including: a power connection female base for being fixed to a mounting position and a power connection male head for being electrically connected to a light-emitting source, the bottom of the power connection female base being provided with a fixing groove with a notch facing the power connection male head, the outer peripheral side of the power connection male head being provided with a clamping groove, the inner side wall of the fixing groove being provided with a clamping lug for being clamped to the clamping groove, the power connection female base being internally provided with a PCB-A board, the power connection male head being internally provided with a PCB-B board, and in the state that the clamping lug is clamped to the clamping groove, a power connection pin of the PCB-A board being electrically connected to the PCB-B board.

Further, the clamping groove is disposed at the top end of the outer peripheral side of the power connection male head, with a notch facing the power connection female base; a clamping block is disposed in the clamping groove; the side edge of the clamping block is provided with a hooking groove; and the end of the clamping lug extends towards the center of the fixing groove and is clamped in the hooking groove.

Further, the clamping lug is an elastic clip wound in the fixing groove, the end of the elastic clip protrudes out of the inner side wall of the fixing groove, and the protruding part is clamped in the hooking groove.

Further, the power connection female base is provided with a female base main body and a female base split body which are both hollowed, the end of the female base main body which is close to the female base split body extends to form a first extension portion sleeved in the female base split body, and the first extension portion and the female base split body are fixedly connected via a first fixing member.

Further, the end of the outer wall of the first extension portion which is away from the female base split body is surrounded by a first annular groove; the end of the outer wall of the first extension portion which is close to the female base split body is axially provided with a cut-through first sliding groove; the first annular groove is disposed in communication with the first sliding groove; and the inner side wall of the female base split body is provided with a first bump which is capable of sliding along the first sliding groove to the first annular groove.

Further, the outer wall of the female base split body which is close to the notch of the fixing groove is provided with a lower cover body which extends outwards and is used for being fixed to the mounting position, and the outer end surface of the lower cover body is provided with a dust cover fixed to the lower cover body.

Further, the inner side wall of the fixing groove is axially provided with a guide groove, and the outer peripheral side of the power connection male head is provided with a guide block for axially sliding in the guide groove.

Further, the power connection male head is provided with a male head main body and a male head split body which are both hollowed, the end of the male head main body which is close to the male head split body extends to form a second extension portion sleeved in the male head split body, and the second extension portion is fixedly connected to the male head split body via a second fixing member.

Further, the end of the outer wall of the second extension portion which is away from the male head split body is surrounded by a second annular groove; the end of the outer wall of the second extension portion which is close to the male head split body is axially provided with a cut-through second sliding groove; the second annular groove is disposed in communication with the second sliding groove; and the inner side wall of the male head split body is provided with a second bump which is capable of sliding along the second sliding groove to the second annular groove.

Further, the end of the power connection male head which is away from the power connection female base is provided with a fixing screw, and the fixing screw is in threaded connection with a connector for fixing the light-emitting source.

Further, a limiting block is formed by protruding from the side wall of the clamping groove and extending into the hooking groove, so as to divide the hooking groove into a locking area and an unlocking area.

An embodiment of the present application provides a separate power connection device. The separate power connection device includes a power connection female base for being fixed to a mounting position and a power connection male head for being electrically connected to a light-emitting source. The bottom of the power connection female base is provided with a fixing groove with a notch facing the power connection male head, the outer peripheral side of the power connection male head is provided with a clamping groove, the inner side wall of the fixing groove is provided with a clamping lug for being clamped to the clamping groove, the power connection female base is internally provided with a PCB-A board, the power connection male head is internally provided with a PCB-B board, and in the state that the clamping lug is clamped to the clamping groove, a power connection pin of the PCB-A board is electrically connected to the PCB-B board. According to the present application, the power connection device is separated into the power connection female base fixed to the mounting position and the power connection male head for being electrically connected to the light-emitting source, the power connection female base and the power connection male head are clamped through the clamping groove and the clamping lug, so that the built-in PCB-A board of the power connection female base and the built-in PCB-B board of the power connection male head are electrically connected, during first-time mounting, a user only need to fix the power connection female base at the mounting position, and connect the light-emitting source to the power connection male head, and on the basis of clamping between the power connection female base and the power connection male head, it is only necessary to mount a power connection male head with a new light-emitting source for replacement during maintenance. Compared with existing power connection devices applied to lamps, the power connection device of the present application is applicable to most lamps and has high adaptability, and lamps using the present application are more convenient to mount and maintain.

### BRIEF DESCRIPTION OF THE DRAWINGS

To make the technical solutions of embodiments of the present application clearer, the accompanying drawings required for describing the embodiment are given briefly below. Apparently, the accompanying drawings in the following description show merely some embodiments of the present application, and a person of ordinary skill in the art may still derive other accompanying drawings from these accompanying drawings without creative efforts.
FIG. 1 is an overall schematic view of a separate power connection device provided in an embodiment of the present application;
FIG. 2 is a schematic enlarged view of area A in FIG. 1;
FIG. 3 is an exploded view of a power connection female base of the separate power connection device provided in the embodiment of the present application;
FIG. 4 is an exploded view of a power connection male head of the separate power connection device provided in the embodiment of the present application;
FIG. 5 is a perspective view showing another embodiment of a male head main body of the separate power connection device of the present application; and
FIG. 6 is a schematic enlarged view of area B in FIG. 5.

As shown in the figures: 1: power connection female base; 11: fixing groove; 111: clamping lug; 12: PCB-A board; 13: pressing terminal; 14: top cover; 101: female base main body; 1011: first annular groove; 1012: first sliding groove; 102: female base split body; 1021: first bump; 103: lower cover body; 104: dust cover; 2: power connection male head; 21: clamping groove; 211: clamping block; 2111: hooking groove; 22: guide block; 201: male head main body; 2011: second annular groove; 2012: second sliding groove; 202: male head split body; 2021: second bump; 23: fixing screw; 24: clamping ring; 25: bottom cover; 26: PCB-B board; 211 a: locking area; 211b: unlocking area; and 212: limit block.

### DETAILED DESCRIPTION

The technical solutions in embodiments of the present application will be clearly and completely described below with reference to the accompanying drawings in the embodiments of the present application. Apparently, the described embodiments are some rather than all of the embodiments of the present application. All other embodiments obtained by a person of ordinary skill in the art based on the embodiment in the present application without creative efforts shall fall within the protection scope of the present application.

It is to be understood that the terms "comprise" and "include", when used in this specification and the appended claims, specify the presence of stated features, integers, steps, operations, elements, and/or components, but do not preclude the presence or addition of one or more other features, integers, steps, operations, elements, components, and/or combinations thereof.

It is also to be understood that the terms used in the specification of the present application herein is for the purpose of describing particular embodiments only and is not intended to limit the present application. As used in the specification of the present application and the appended claims, "a", "an", and "the" in the singular forms are intended to include the plural forms as well, unless otherwise stated clearly in the context.

It is to be further understood that the term "and/or" as used in the specification of the present application and the appended claims refers to any and all possible combinations of one or more of the associated listed items, and includes these combinations.

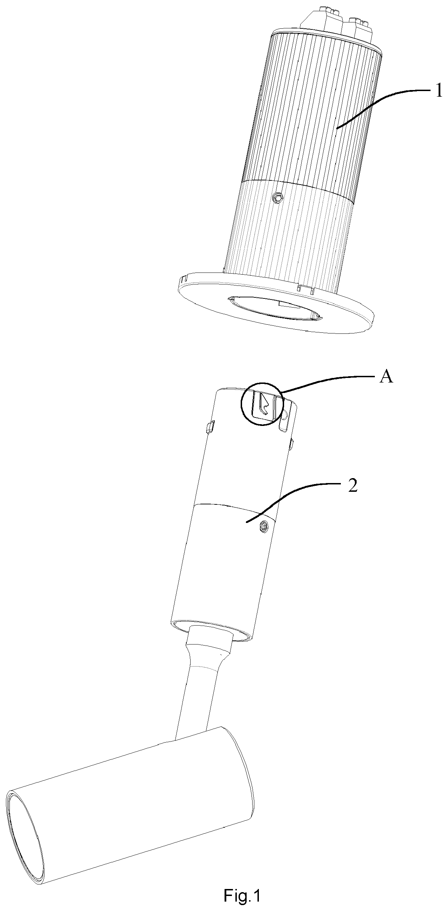

As shown in FIG. 1, an embodiment of the present application provides a separate power connection device, including a power connection female base 1 for being fixed to a mounting position and a power connection male head 2 for being electrically connected to a light-emitting source, where the bottom of the power connection female base 1 is provided with a fixing groove 11 with a notch facing the power connection male head 2, the outer peripheral side of the power connection male head 2 is provided with a clamping groove 21, the inner side wall of the fixing groove 11 is provided with a clamping lug 111 for being clamped to the clamping groove 21, the power connection female base 1 is internally provided with a PCB-A board 12, the power connection male head 2 is internally provided with a PCB-B board 26, and in the state that the clamping lug 111 is clamped to the clamping groove 21, a power connection pin of the PCB-A board 12 is electrically connected to the PCB-B board 26. According to the present application, the power connection device is separated into the power connection female base 1 fixed to the mounting position and the power connection male head 2 for being electrically connected to the light-emitting source, the power connection female base 1 and the power connection male head 2 are clamped through the clamping groove 21 and the clamping lug 111, so that the built-in PCB-A board 12 of the power connection female base 1 and the built-in PCB-B board 26 of the power connection male head 2 are electrically connected, during first-time mounting, a user only need to fix the power connection female base 1 at the mounting position, and connect the light-emitting source to the power connection male head 2, and on the basis of clamping between the power connection female base 1 and the power connection male head 2, it is only necessary to mount a power connection male head 2 with a new light-emitting source for replacement during maintenance. Compared with a power connection device applied to the existing lamp, the power connection device of the present application can adapt to most lamps and has high adaptability, and lamps applying the present application are more convenient to mount and maintain.

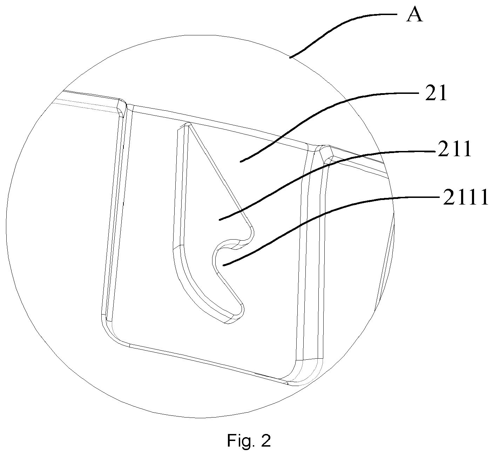

As shown in FIG. 1 and FIG. 2, the clamping groove 21 is disposed at the top end of the outer peripheral side of the power connection male head 2, with a notch facing the power connection female base 1. A clamping block 211 is disposed in the clamping groove 21. The side edge of the clamping block 211 is provided with a hooking groove 2111. The end of the clamping lug 111 extends towards the center of the fixing groove 11 and is clamped in the hooking groove 2111. When the power connection male head 2 stretches into the power connection female base 1 for clamping, the clamping lug 111 is clamped into the hooking groove 2111 along the side surface of a clamping hole, so that the power connection female base 1 is clamped to the power connection male head 2.

As shown in FIG. 2, in order to mount the power connection male head 2 conveniently, preferably, the clamping lug 111 is an elastic clip wound in the fixing groove 11. The PCB-A board 12 with the power connection pin is above the elastic clip, the PCB-A board 12 is a pressing terminal 13. A top cover 14 covering the power connection female base 1 is disposed above the pressing terminal 13. The end of the elastic clip protrudes out of the inner side wall of the fixing groove 11, and the protruding part is clamped in the hooking groove 2111. By using the elastic clip as the clamping lug 111, the clamping lug 111 can be clamped into the hooking groove 2111 by elastic deformation when the power connection male head 2 is clamped to the power connection female base 1, so as to improve the mounting convenience of the power connection male head 2 and the power connection female base 1. In this embodiment, the elastic clip is a steel wire clip. The steel wire clip is a semi-circular steel wire, and both ends of the steel wire clip extend downward along the inner wall of the fixing groove and then protrude out of the fixing groove.

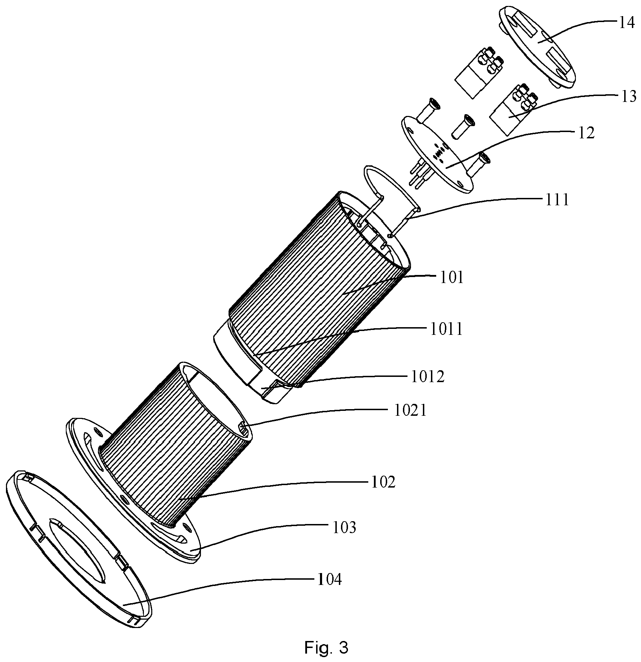

As shown in FIG. 3, in order to detach and maintain the power connection female base 1 conveniently, the power connection female base 1 is provided with a female base main body 101 and a female base split body 102 which are both hollowed. The end of the female base main body 101 which is close to the female base split body 102 extends to form a first extension portion sleeved in the female base split body 102. The first extension portion and the female base split body 102 are fixedly connected via a first fixing member. In this embodiment, the first fixing member is a set screw. The opposite positions of the first extension portion and the female base split body are each provided with a through hole. The set screw passes through the through holes to connect the female base split body 102 and the female base main body 101.

As shown in FIG. 3, in order to mount the female base main body 101 and the female base split body 102 conveniently, the end of the outer wall of the first extension portion which is away from the female base split body 102 is surrounded by a first annular groove 1011. The end of the outer wall of the first extension portion which is close to the female base split body 102 is axially provided with a cut-through first sliding groove 1012. The first annular groove 1011 is disposed in communication with the first sliding groove 1012. The inner side wall of the female base split body 102 is provided with a first bump 1021 which is capable of sliding along the first sliding groove 1012 to the first annular groove 1011. When the female base main body 101 and the female base split body 102 are mounted, the first bump 1021 of the female base split body 102 slides along the first sliding groove 1012 of the first extension portion to the first annular groove 1011, and then the female base split body 102 is rotated to slide the first bump 1021 along the first annular groove 1011 to adjust the positions of the through holes of the first extension portion and the female base split body 102, so that the through holes of the first extension portion and the female base split body 102 are at the same opposite positions, and the set screw passes through the through holes to connect the male head split body 202 and the male head main body 201.

As shown in FIG. 3, the outer wall of the female base split body 102 which is close to the notch of the fixing groove 11 is provided with a lower cover body 103 which extends outwards and is used for being fixed to the mounting position. The outer end surface of the lower cover body 103 is provided with a dust cover 104 fixed to the lower cover body 103. A through hole is formed in the lower cover body 103. When the power connection female base 1 is fixed to the mounting position, the lower cover body 103 is adhered to the surface of the mounting position; the power connection female base 1 stretches into the mounting position; and the power connection female base 1 is fixed to the mounting position by using the screw passing through the through hole of the lower cover body 103. Further, since the mounting position is usually on a ceiling, in order to prevent the lower cover body 103 from being contaminated with brushing coating when a user brushes the ceiling, the end surface of the lower cover body 103 is provided with a dust cover 104.

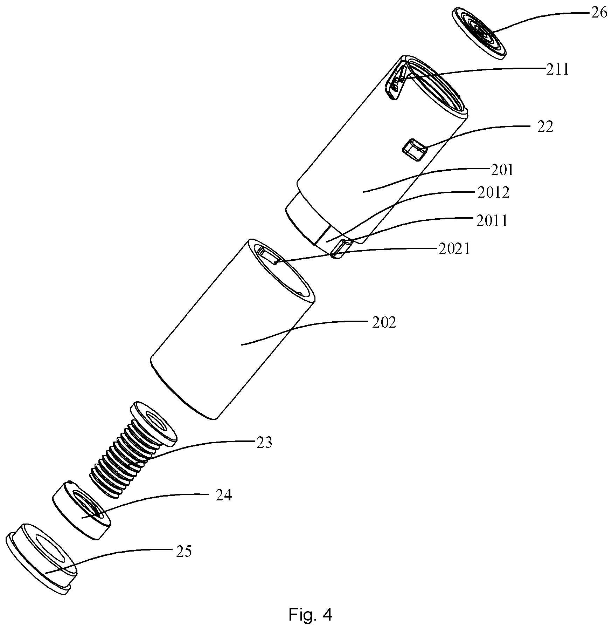

As shown in FIG. 4, in order to further facilitate the clamping of the power connection female base 1 and the power connection male head 2, the inner side wall of the fixing groove 11 is axially provided with a guide groove, and the outer peripheral side of the power connection male head 2 is provided with a guide block 22 for axially sliding in the guide groove. When the power connection male head 2 stretches into the fixing groove 11 and is clamped to the power connection female base 1, the guide block 22 moves along the guide groove, accelerating the mounting of the power connection male head 2.

As shown in FIG. 4, in order to detach and maintain the power connection male head 2 conveniently, the power connection male head 2 is provided with the male head main body 201 and the male head split body 202 which are both hollowed, the male head main body 201 extends to the end which is close to the male head split body 202 to form a second extension portion sleeved in the male head split body 202, and the second extension portion is fixedly connected to the male head split body 202 via a second fixing member. In this embodiment, the second fixing member is a set screw, the opposite positions of the second extension portion and the male head split body 202 are each provided with a through hole, and the set screw passes through the through holes to connect the male head split body 202 and the male head main body 201.

As shown in FIG. 4, the end of the outer wall of the second extension portion which is away from the male head split body 202 is surrounded by a second annular groove 2011. The end of the outer wall of the second extension portion which is close to the male head split body 202 is axially provided with a cut-through second sliding groove 2012. The second annular groove 2011 is disposed in communication with the second sliding groove 2012. The inner side wall of the male head split body 202 is provided with a second bump 2021 which is capable of sliding along the second sliding groove 2012 to the second annular groove 2011. When the male head main body 201 and the male head split body 202 are mounted, the second bump 2021 of the male head split body 202 slides along the second sliding groove 2012 of the second extension portion to the second annular groove 2011, and then the male head split body 202 is rotated to slide the second bump 2021 along the second annular groove 2011 to adjust the positions of the through holes of the second extension portion and the male head split body 202, so that the through holes of the second extension portion and the male head split body 202 are at the same opposite positions, and the set screw passes through the through holes to connect the male head split body 202 and the male head main body 201.

As shown in FIG. 4, the end of the power connection male head 2 away from the power connection female base 1 is provided with a fixing screw 23, and the fixing screw 23 is in threaded connection with a connector for fixing the light-emitting source. Specifically, one end of the fixing screw 23 is in threaded connection with a clamping ring 24. After the fixing screw 23 is connected to the clamping ring 24, a bottom cover 25 of the power connection male head 2 is connected. The other end of the fixing screw 23 is used for connecting the connector with the light-emitting source. Through the design of connection between the fixing screw 23 and the connector, it is not necessary to specially design a connecting structure corresponding to the light-emitting source for the power connection male head 2, which greatly improves the adaptability of the power connection male head 2.

It should be noted that the pressing terminal 13 is disposed at the end of the power connection female base 1 which is away from the fixing groove 11. The pressing terminal 13 is electrically connected to the PCB-A board 12. When being fixed to the mounting position, the power connection female base 1 is in power-on connection with a power source through the pressing terminal 13. The power connection male head 2 is internally provided with a control panel with the PCB-B board. Based on the control panel, when the power connection pin of the PCB-A board 12 is electrically connected to the PCB-B board 26, the light-emitting source connected to the power connection male head 2 operates to emit light.

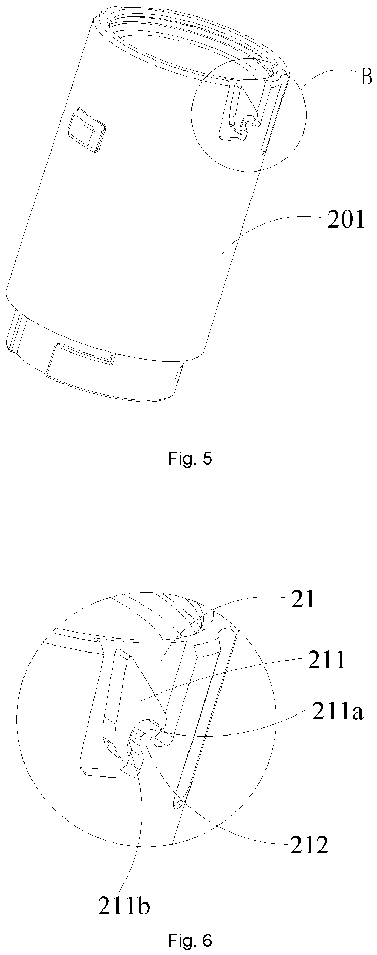

FIG. 5 and FIG. 6 show another embodiment of the male head main body 201. In this embodiment, the main difference compared to the above embodiment is the specific structure of the clamping groove 21 and the clamping block 211. As shown in FIG. 5 and FIG. 6, in this embodiment, the side of the clamping block 211 is provided with a hooking groove 2111, and a limiting block 212 is formed by protruding from the side wall of the clamping groove 21 and extending into the hooking groove 2111, so as to divide the hooking groove 2111 into a locking area 211a and an unlocking area 211b. During installation, the power connection male head 2 is inserted into the power connection female base 1 and pushed to a predetermined position, where the end of the clamping lug 111 snaps into the locking area 211a of the hooking groove 2111; during disassembly, the power connection male head 2 is pressed so that the end of clamping lug 111 slides from the locking area 211a into the unlocking area 211b and finally disengages from the clamping block 211 and the limiting block 212, allowing the power connection male head 2 to be removed. It is easy to assemble and disassemble and more solid when assembled.

According to the present application, the power connection device is separated into the power connection female base 1 fixed to the mounting position and the power connection male head 2 for being electrically connected to the light-emitting source, the power connection female base 1 and the power connection male head 2 are clamped through the clamping groove 21 and the clamping lug 111, so that the built-in PCB-A board 12 of the power connection female base 1 and the built-in PCB-B board 26 of the power connection male head 2 are electrically connected, during first-time mounting, a user only need to fix the power connection female base 1 at the mounting position, and connect the light-emitting source to the power connection male head 2, and on the basis of clamping between the power connection female base 1 and the power connection male head 2, it is only necessary to mount a power connection male head 2 with a new light-emitting source for replacement during maintenance. Compared with a power connection device applied to the existing lamp, the power connection device of the present application can adapt to most lamps and has high adaptability, and lamps applying the present application are more convenient to mount and maintain.

The embodiments in this specification are all described in a progressive manner. Description of each of the embodiments focuses on differences from other embodiments, and reference may be made to each other for the same or similar parts among the embodiments. The apparatus embodiments basically correspond to the method embodiments and therefore are only briefly described, and reference may be made to the method embodiments for the associated part. It should be noted that a person of ordinary skill in the art may make several improvements and modifications without departing from the principle of the present application. All such improvements and modifications shall fall within the protection scope claimed by the present application.

It is also to be noted that, in the specification, the relational terms herein such as first and second are used only to differentiate an entity or operation from another entity or operation, and do not require or imply any actual relationship or sequence between these entities or operations. Furthermore, the terms "comprise", "include", or any other variation thereof, are intended to cover a non-exclusive inclusion.

Inclusion makes a process, a method, an article, or a device that includes a series of elements not only include such elements, but also include other elements not specified expressly, or include inherent elements of the process, method, article, or device. If no more limitations are made, an element limited by the statement "include a/an..." does not exclude other same elements existing in the process, the method, the article, or the device which includes the element.

## Claims

1. A separate power connection device, comprising: a power connection female base for being fixed to a mounting position and a power connection male head for being electrically connected to a light-emitting source, the bottom of the power connection female base being provided with a fixing groove with a notch facing the power connection male head, the outer peripheral side of the power connection male head being provided with a clamping groove, the inner side wall of the fixing groove being provided with a clamping lug for being clamped to the clamping groove, the power connection female base being internally provided with a PCB-A board, the power connection male head being internally provided with a PCB-B board, and in the state that the clamping lug is clamped to the clamping groove, a power connection pin of the PCB-A board being electrically connected to the PCB-B board.

2. The separate power connection device according to claim 1, wherein the clamping groove is disposed at the top end of the outer peripheral side of the power connection male head, with a notch facing the power connection female base; a clamping block is disposed in the clamping groove; the side edge of the clamping block is provided with a hooking groove; and the end of the clamping lug extends towards the center of the fixing groove and is clamped in the hooking groove.

3. The separate power connection device according to claim 2, wherein the clamping lug is an elastic clip wound in the fixing groove, the end of the elastic clip protrudes out of the inner side wall of the fixing groove, and the protruding part is clamped in the hooking groove.

4. The separate power connection device according to claim 1, wherein the power connection female base is provided with a female base main body and a female base split body which are both hollowed, the end of the female base main body which is close to the female base split body extends to form a first extension portion sleeved in the female base split body, and the first extension portion and the female base split body are fixedly connected via a first fixing member.

5. The separate power connection device according to claim 4, wherein the end of the outer wall of the first extension portion which is away from the female base split body is surrounded by a first annular groove; the end of the outer wall of the first extension portion which is close to the female base split body is axially provided with a cut-through first sliding groove; the first annular groove is disposed in communication with the first sliding groove; and the inner side wall of the female base split body is provided with a first bump which is capable of sliding along the first sliding groove to the first annular groove.

6. The separate power connection device according to claim 4, wherein the outer wall of the female base split body which is close to the notch of the fixing groove is provided with a lower cover body which extends outwards and is used for being fixed to the mounting position, and the outer end surface of the lower cover body is provided with a dust cover fixed to the lower cover body.

7. The separate power connection device according to claim 1, wherein the inner side wall of the fixing groove is axially provided with a guide groove, and the outer peripheral side of the power connection male head is provided with a guide block for axially sliding in the guide groove.

8. The separate power connection device according to claim 1, wherein the power connection male head is provided with a male head main body and a male head split body which are both hollowed, the end of the male head main body which is close to the male head split body extends to form a second extension portion sleeved in the male head split body, and the second extension portion is fixedly connected to the male head split body via a second fixing member.

9. The separate power connection device according to claim 8, wherein the end of the outer wall of the second extension portion which is away from the male head split body is surrounded by a second annular groove; the end of the outer wall of the second extension portion which is close to the male head split body is axially provided with a cut-through second sliding groove; the second annular groove is disposed in communication with the second sliding groove; and the inner side wall of the male head split body is provided with a second bump which is capable of sliding along the second sliding groove to the second annular groove.

10. The separate power connection device according to claim 1, wherein the end of the power connection male head which is away from the power connection female base is provided with a fixing screw, and the fixing screw is in threaded connection with a connector for fixing the light-emitting source.

11. The separate power connection device according to claim 2, wherein a limiting block is formed by protruding from the side wall of the clamping groove and extending into the hooking groove, so as to divide the hooking groove into a locking area and an unlocking area.
